Europäisches Patentamt

European Patent Office

Office européen des brevets

(11) Publication number: **0 159 406**
**A1**

# EUROPEAN PATENT APPLICATION

(21) Application number: **84115824.9**

(22) Date of filing: **20.02.81**

(51) Int. Cl.⁴: **G 02 B 26/02**, G 02 B 6/28

(43) Date of publication of application: **30.10.85**
**Bulletin 85/44**

(84) Designated Contracting States: **BE DE FR GB IT NL SE**

(60) Publication number of the earlier application in
accordance with Art. 76 EPC: **0058789**

(71) Applicant: **KAPTRON INC., 3460 W. Bayshore Road, Palo
Alto California 94303 (US)**

(72) Inventor: **Kapany, Narinder Singh, 2126 Greenways
Drive, Woodside California (US)**
Inventor: **Unterleitner, Fred Charles, 580 College
Avenue, Palo Alto California (US)**

(74) Representative: **Wain, Christopher Paul et al, A.A.
THORNTON & CO. Northumberland House 303-306 High
Holborn, London WC1V 7LE (GB)**

(54) **Fibre optics switch.**

(57) An optical fibre switch (110) includes a body (120) of
transparent material to one end of which a plurality of fibres
(112, 115, 117) are secured, and at the other end of which
a spherical mirror (130) is formed. The body (120) is of a
flexible material and includes a necked region (135) which
permits the mirror to be pivoted to reflect light between one
pair of fibres (112 and 115) in one position of the mirror and
another pair of fibres (112 and 117) in another position of the
mirror. The mirror may be indexed between its two positions
by means of electromagnets (145, 146).

0159406

- 1 -

FIBRE OPTICS SWITCH

This invention relates to a switch for an optical fibre system.

As existing communication systems have become increasingly overloaded, optical transmission through transparent fibres has been found to provide a means of achieving a smaller cross-section per message, thus enabling an increased capacity within existing conduit constraints. The basic medium of transmission is an optical fibre A first type of fibre is a stepped index fibre which comprises a transparent core member and a transparent cladding, the core member having a higher index of refraction than the cladding. Light is transmitted through the core, and contained within the core by internal reflection. So long as the light does not deviate from the fibre axis by more than the complement of the critical angle for the core-cladding interface, total internal reflection with substantially no loss results. A second type of fibre is a graded index fibre whose refractive index gradually decreases away from the fibre axis. Transmission is highly reliable, and is substantially insensitive to electrical noise, cross coupling between channels, and the like.

As with any communication medium, once a suitable transmission line has been found, the need arises for modules to couple sources and detectors to the line, couple lines together, perform switching, splitting, duplexing, and multiplexing functions. Ultimately, the total system can be no more reliable than these modules. When it is considered that the core of a typical optical communication fibre is characterized by a diameter of only 60 microns, it can be immediately appreciated that such modules must be fabricated and installed to highly precise tolerances.

In order to realize the inherent reliability of optical fibre communication systems, the modules themselves must be highly reliable since they are typically installed in relatively inaccessible locations (e.g. within conduits running under city streets, etc.). A further requirement for a satisfactory optical communication system is that the modules introduce a minimum of loss into the system. It has only been with the development of extremely high transparency fibres that optical fibre communication has become practical, and the introduction of lossy modules would considerably undercut the advantages and efficacy of such systems.

An article at pages 71-72 of LASER FOCUS Volume 16, Number 9 (September 1980) discloses a coupler which makes use of a glass element with a rear reflect surface, and suggests a switch in which such a glass element is physically moved so that the input from one fibre is reflected back to one of two output fibres. However, the article is silent as to the shape of the glass element to be used in such a switch, and the manner in which it is to be mounted relative to the fibres and moved to effect switching. Thus, this article does not provide any practical solution to the problem of providing a switch, but merely discloses the idea of using a movable glass element with a rear reflective surface in a switch.

According to the present invention there is provided a switch for an optical fibre system comprising: means for mounting the ends of a plurality of optical fibres in substantially co-planar relationship; a spherical mirror mounted with the centre of curvature thereof substantially in the plane of the optical fibre ends; and means for selectively shifting the mirror between a plurality of preselected locations, each location of the mirror being such that the centre of curvature of the mirror is located mid-way between a pair of optical fibre ends whereby the mirror provides an optical path between one pair of optical fibres in each selected position thereof.

An embodiment of single-pole/N-throw switch according to the present invention has an input fibre, a plurality of output fibres, and a single continuous smooth imaging surface. In order to selectively communicate optical information between the input fibre and one of the output fibres, the switch is provided with pivot means for allowing rotation of the reflective surface about a point between the focal plane and the reflective surface so that the optic axis may be caused to intersect the focal plane at varying positions depending on the rotation, and indexing means for maintaining the reflecting surface in a selected one of a plurality of positions wherein the optic axis intersects the focal plane substantially midway between the input fibre end and the corresponding output fibre end. Electromagnet coils may be used to selectively cause the pivoting. The transparent element may be fabricated from flexible material and provided with a necked portion for flexing, or may be rigid and articulated, having, for example, an optical ball bearing interface.

The invention will be better understood from the following description of preferred embodiments thereof, given by way of example only, reference being had to the accompanying drawings, wherein:

Figure 1A is a simplified cross-sectional view of a first embodiment of switch according to the invention;

Figure 1B is a view corresponding to Figure 1A of a second embodiment of the invention; and

Figure 2 is a perspective view, partly broken away, showing a mechanism for achieving increased precision for the switchs of Figure 1A and 1B.

Figure 1A is a cross-sectional view of a two-way (single-pole/double-throw) switch 110 for selectively directing light travelling along an input fibre 112 to either of paired output fibres 115 and 117. Switch 110 comprises a transparent body 120 having respective fibre insertion holes 122,125 and 127 at one end, and a continuous, mathematically smooth focusing surface 130 at the other end. Selective switching is accomplished by providing pivoting means to permit reflective surface 130 to rotate relative to the fibre insertion holes about a point 132 intermediate the fibre ends and the reflective surface and located along the axis of input fibre 112. This is accomplished by fabricating body 120 out of a flexible transparent material and providing the body with a necked portion 135 proximate pivot point 132 of relatively small diameter to permit flexing without deformation of the remaining portions of body 120. In particular, when body 120 is flexed about pivot point 132, a body portion 137 moves relative to a body portion 138 to permit the center of curvature of spherical surface of segment 130 to be selectively directed to a point midway between the ends of fibres 112 and 115 or between the ends of fibres 112 and 117.

The rotation is effected by electromagnetic deflection. A soft steel sleeve 140 surrounds body portion 137 having reflective surface 130 thereon and carries tapered wedge sections 142 and 143. For an N-way switch, there are N such wedge sections. Corresponding electromagnets 145 and 146 are mounted to the fixed housing corresponding to each switch position. Each electromagnet includes a yoke 147 and a coil 148. The yoke has portions defining a tapered depression with surfaces adapted to mate with the outer surfaces of its respective wedge section on sleeve 140 in order to index movable body portion 137 to the desired position. Magnetic latch elements 150 may be provided to maintain a given switch position after the respective electromagnet current has been turned off.

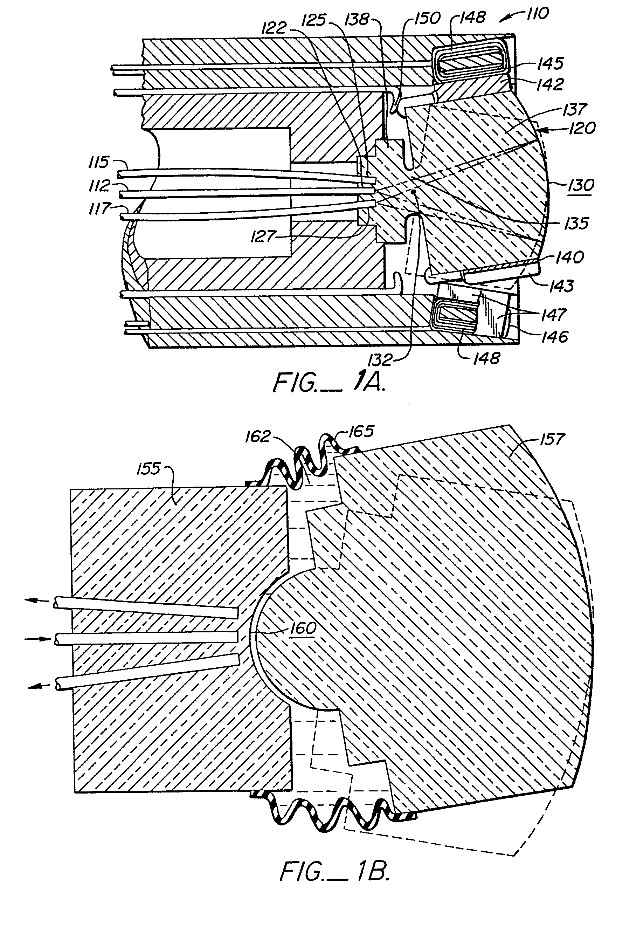

Figure 1B is a simplified cross-sectional view showing an alternative embodiment of a two-way switch. This embodiment differs from that of Figure 1B in that the body comprises two relatively movable portions 155 and 157 having a spherical interface 160 therebetween to define an optical ball bearing. The variable region between body portions 155 and 157 is filled with a silicone oil reservoir 162 being bounded by a suitable bellows 165. The two mating parts are maintained in tension against one another by a magnet or spring (not shown). While Figures 1A and 1B illustrate two-way switches, it will be immediately appreciated that an N-way switch is achieved by the provision of additional input fibre insertion holes, additional indexing electromagnets, and corresponding tapered wedge sections on the sleeve.

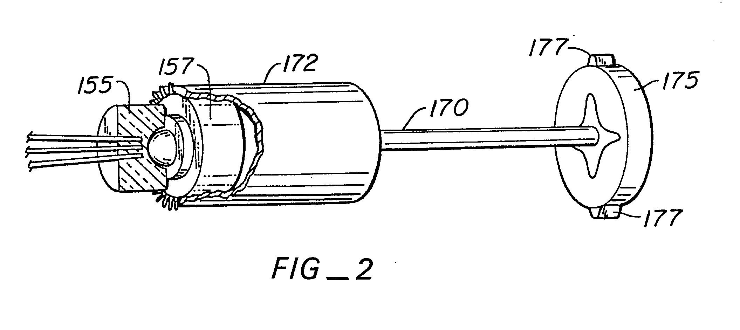

Figure 2 illustrates an indexing system suitable for either of the two switch embodiments described above, but illustrated for the embodiment of Figure 1B for definiteness. It will be immediately apparent that the angular positioning of movable body portion 157 with respect to fixed body portion 155 having fibre insertion holes therein is extremely critical to proper operation of the switch. In particular this translates into precise tolerances on the fabrication of the sleeve surrounding the movable body portion and the location of the electromagnets. It has been found that increased precision of angular orientation can be achieved by separating the wedges and electromagnets from the movable body portion along the axial direction. In particular, an axial lever arm 170 rigidly couples a sleeve 172 surrounding movable body 157 with a soft steel ring 175 having tapered wedged portion 177 mounted thereon in the same fashion that tapered wedged portion 142 and 143 were mounted to sleeve 140 in Figure 1A. Sleeve 172, lever arm 170 and ring 175 are coaxially aligned. Electromagnets, not shown, co-operate with wedges 177 and precisely the same manner that electromagnets 145 and 146 co-operated with wedges 142 and 143 in Figure 1A.

While the above provides a full and complete disclosure of the preferred embodiments of the present invention, various modifcations, alternate constructions, and equivalents may be employed without departing from the scope of the invention. For example, the switches described are geometrically symmetric devices. However, there is no need for such geometrical symmetry, nor is there any absolute requirement that the switching be total. Rather, a switch could employ features of a splitter as well in order to provide partial switching and partial splitting.

CLAIMS

1.      A switch for an optical fibre system comprising: means for mounting the ends of a plurality of optical fibres in substantially co-planar relationship; a spherical mirror mounted with the centre of curvature thereof substantially in the plane of the optical fibre ends; and means for selectively shifting the mirror between a plurality of preselected locations, each location of the mirror being such that the centre of curvature of the mirror is located mid-way between a pair of optical fibre ends whereby the mirror provides an optical path between one pair of optical fibres in each selected position thereof.

2.      A switch according to claim 1 wherein the mirror is mounted for pivotal movement about a point located between the common plane of the fibre ends and the reflective surface of the mirror to permit shifting of the mirror between said plurality of preselected locations.

3.      A switch according to claim 2 comprising a body of transparent material having a first end contoured to define said mirror and a second end provided with cylindrical bores terminating at said common plane to at least partially define said fibre mounting means.

4.      A switch according to claim 3 wherein said body is formed of a flexible material and includes a necked portion between said first end and said common plane such that such pivoting occurs about said necked portion.

5.      A switch according to claim 3 wherein said body comprises first and second portions having a spherical interface at a position intermediate said common plane and said mirror surface, said interface permitting said pivotal movement.

6.      A switch according to any preceding claim wherein said shifting means comprises: an open frame rigidly coupled to said fibre mounting means and having portions defining a plurality of inwardly opening tapered depressions; and a member rigidly coupled to said mirror by a lever, said member having a corresponding plurality of outwardly protruding tapered wedge elements adapted to mate with said depressions on said frame such that when one of said wedges is seated in its corresponding depression, said reflective surface is in one of said preselected locations, said lever providing a relatively large translational movement of said wedge elements for a relatively small angular movement for the mirror whereby said preselected locations can be accurately obtained relatively despite loose tolerances in said shifting means.

FIG.__ 1A.

FIG.__ 1B.

FIG _ 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PROC. OF THE NAT. ELECTR. CONF., vol. 33, October 1979, pages 188-193; R.A. SOREF et al.: "Fiber-optic switching techniques" * Page 188, column 2, figure 6 * | 1,2 | G 02 B 26/02 G 02 B 6/28 |
| A | US-A-3 389 950 (K. HARPER) * Abstract * | 1 | |
| A | PATENTS ABSTRACTS OF JAPAN, vol. 5, no. 13(P-46)[685], 27th January 1981; & JP - A - 55 142 303 (NIPPON DENSHIN DENWA KOSHA) 06-11-1980 | 1 | |
| A | US-A-4 143 941 (R.A. SOREF) * Abstract; figures * | 1 | |
| A | US-A-4 182 544 (D. McMAHON) * Abstract; ffigures * | 1 | G 02 B 26/02 G 02 B 26/08 G 02 B 6/28 |
| A | US-A-3 886 544 (L. NARODNY) * Claims * | 1 | |
| A | PATENTS ABSTRACTS OF JAPAN, vol. 4, no. 146 (P-31)[628], 15th October 1980, page 118P31; & JP - A - 55 95908 (FUJITSU K.K.) 21-07-1980 | 1 | |

TECHNICAL FIELDS SEARCHED (Int. Cl.4)

--- -/-

The present search report has been drawn up for all claims

| Place of search | Date of completion of the search | Examiner |
|---|---|---|
| THE HAGUE | 03-07-1985 | PFAHLER R. |

European Patent
Office

**EUROPEAN SEARCH REPORT**

0159406

Application number

EP 84 11 5824

| | DOCUMENTS CONSIDERED TO BE RELEVANT | | Page 2 |

| Category | Citation of document with indication, where appropriate, of relevant passages | Relevant to claim | CLASSIFICATION OF THE APPLICATION (Int. Cl.4) |
|---|---|---|---|
| A | US-A-4 123 146 (J. DRAGT)<br>* Abstract *<br><br>————— | 1 | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 03-07-1985 | PFAHLER R. |